# EUROPEAN PATENT APPLICATION

(11) **EP 4 576 023 A1**
(43) Date of publication of application: **25.06.2025**
(21) Application number: 23219694.9
(22) Date of filing: 22.12.2023
(51) Int. Cl.: G06V 20/56

(54) **A METHOD FOR GENERATING AN ANNOTATED TRAINING DATA SET FOR TRAINING A PERCEPTION ALGORITHM OF AN AUTOMATED DRIVING SYSTEM**

(71) Applicant: Zenseact AB, 417 56 Göteborg (SE)
(72) Inventor: WAUBERT, Benjamin, 411 22 Göteborg (SE); GUSTAFSSON, Niklas, 421 49 Västra Frölunda (SE)
(74) Representative: Zacco Sweden AB

(57) **Abstract**

A computer-implemented method (300) for generating an annotated training data set (612) for training a perception algorithm (514) of an automated driving system (ADS) (510) of a vehicle (1), said method (300) comprising
obtaining (302) a sequence of frames (600) captured by one or more Light Detection and Ranging (LiDAR) sensors (524'),
predicting (304), by using a road reference object (RRO) prediction neural network (602), an RRO position data set (604) for each of at least a sub-set of the frames (600), wherein each RRO position data set (602) comprises one or more RRO position data sub-sets for one or more RRO:s, respectively, wherein each RRO position data sub-set is related to spatial information of one RRO found in the frames,
matching (306) the one or more RRO position data sub-sets of one frame with the one or more RRO position data sub-sets of at least one other frame to populate a global RRO position data set (608), wherein the global RRO position data set (608) comprises one or more global RRO position data sub-sets, wherein each of the global RRO position data sub-sets has corresponding RRO position data sub-sets in at least two of the frames (600), and
forming (308) the annotated training data set (612) based on the sequence and the global RRO position data set (608).

## Description

### TECHNICAL FIELD

The disclosed technology relates to methods and systems for generating an annotated training data set for training a perception algorithm of an automated driving system (ADS) of a vehicle. In particular, but not exclusively, the disclosed technology relates to generating annotated training data more efficiently.

### BACKGROUND

During the last couple of years, the development within the field of automated driving has made significant leaps. By way of example, it is today common practice to use deep neural networks as part of the systems used for controlling the vehicle or assisting a driver of the vehicle. In addition to the development within the field of data processing, sensor development has also improved. For instance, by being able to capture reliable sensor data at a high frequency and at a competitive cost, improved input to the deep neural network can be provided. Thus, by the development within the field of data processing, e.g. the development of deep neural network technologies, in combination with more efficient and reliable sensors, it is made possible to make more reliable and robust systems for automated driving.

However, even if it today exists technology in the form of deep neural networks that can be used for generating reliable models for automated driving as well as improved sensors, e.g. LiDAR (Light Detection and Ranging) sensors, there are still challenges. One such challenge is how to efficiently generate annotated training data such that the neural network, or other model, can be trained adequately. As the demands on the automated driving systems are continuously increasing, this becomes more relevant. Put differently, to handle an increased variety of traffic situations, more complex models are required. By way of example, if the model is restricted to only be used in predetermined highway sections under certain road conditions, a less complex model can be used compared to if the model is to be able to handle highways in general without being restricted to certain road conditions.

Despite that more complex models for data processing is being used and that sensors producing more data is being used, it is still common that human operators produce training data manually. For instance, it is today common that the training data is produced by presenting the sensor data to the operators and that the operators identify objects in the sensor data. To make it easier for the operators to identify the objects, different software programs have been developed. Further, to facilitate for the operators to identify the objects, which may be lane markers, other vehicles, pedestrians, wild animals etc, the sensor data can be processed before being displayed to the operators.

Even though it is possible today to produce automated driving systems that can handle a variety of different traffic situations, by being able to produce the training data used for perception modules in automated driving systems (ADS) more efficiently, it is made possible to further improve the ADS. Since having access to vast amount of training data is often a bottle-neck, by being able to generate such data more efficiently, this provides for that significant improvements of the ADS can be made possible.

### SUMMARY

The herein disclosed technology seeks to mitigate, alleviate or eliminate one or more of the above-identified deficiencies and disadvantages in the prior art to address various problems relating to generating an annotated training data set for training a perception algorithm of an ADS.

Various aspects and embodiments of the disclosed invention are defined below and in the accompanying independent and dependent claims.

A first aspect of the disclosed technology comprises a computer-implemented method for generating an annotated training data set for training a perception algorithm of an ADS of a vehicle. The method 300 comprises obtaining a sequence of frames captured by one or more Light Detection and Ranging (LiDAR) sensors, and predicting, by using a road reference object (RRO) prediction neural network, an RRO position data set for each of at least a sub-set of the frames, where each RRO position data set comprises one or more RRO position data sub-sets for one or more RRO:s, respectively, where each RRO position data sub-set is related to spatial information of one RRO found in the frames. The method further comprises matching the one or more RRO position data sub-sets of one frame with the one or more RRO position data sub-sets of at least one other frame to populate a global RRO position data set, wherein the global RRO position data set comprises one or more global RRO position data sub-sets, where each of the global RRO position data sub-sets has corresponding RRO position data sub-sets in at least two of the frames, and forming the annotated training data set based on the sequence and the global RRO position data set.

The RRO position data set, and also the RRO position data sub-sets, are related to spatial information as the name suggest. However, in addition to this, these may comprise information about a type of the RRO, e.g. lane marker or median barrier, a cardinality of the RRO, that is, a number of elements included, and other properties that may be linked to the RRO. This information may be linked to the RRO position data set, that is, all the RROs in the frame, but also individually to the RRO position data sub-sets, that is, the properties may be linked to individual RROs of the frame.

The RRO position data set may comprise information about all RROs identified in the frame. The RRO position data sub-set may comprise information about one of these RROs. Put differently, the RRO position data set may comprise a plurality of RRO position data sub-sets. By way of example, in case the frame comprises one single RRO, the RRO position data set comprises one RRO position data sub-set.

Even though described above that the LiDAR is used for obtaining the sequence of frames, one or several sensors of another type can also be used. For instance, one or several cameras, or more generally image-based sensors, can be used for obtaining the sequence.

A second aspect of the disclosed technology comprises a computer program product comprising instructions which, when the program is executed by a computing device, causes the computing device to carry out the method according to any one of the embodiments of the first aspect disclosed herein. With this aspect of the disclosed technology, similar advantages and preferred features are present as in the other aspects.

A third aspect of the disclosed technology comprises a (non-transitory) computer-readable storage medium comprising instructions which, when executed by a computing device, causes the computing device to carry out the method according to any one of the embodiments of the first aspect disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises an apparatus for generating an annotated training data set for training a perception algorithm of an automated driving system (ADS) of a vehicle, the apparatus comprising a control circuitry configured to obtain a sequence of frames captured by at least one LiDAR sensor, predict, by using a road reference object (RRO) prediction neural network, an RRO position data set for each of at least a sub-set of the frames, wherein each RRO position data set comprises one or more RRO position data sub-sets for one or more RROs, respectively, where each RRO position data sub-set is related to spatial information of one RRO found in the frames, match the one or more RRO position data sub-sets of one frame with one or more RRO position data sub-sets of at least one other frame to populate a global RRO position data set, wherein the global RRO position data set comprises one or more global RRO position data sub-sets, wherein each of the global RRO position data sub-sets has corresponding RRO position data sub-sets in at least two of the frames, and form the annotated training data set based on the sequence and the global RRO position data set. With this aspect of the disclosed technology, similar advantages and preferred features are present as in the other aspects.

A fifth aspect of the disclosed technology comprises a vehicle comprising: an ADS comprising a perception algorithm, at least one LiDAR sensor, and an apparatus for generating an annotated training data set for training the perception algorithm of the ADS according to the second aspect. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that the annotated training data set can be provided more efficiently since the need for manual intervention can be reduced or even in some cases completely avoided. In addition to being more efficient, the annotation of the training data may also be made in a more consistent manner compared to, as is common today, having a large group of human operators, that may make mistakes or interpreting instructions differently, performing the annotation. An effect of being able to produce the training data at a larger scale, compared to what is possible if producing manually, is that the ADS can be trained on a different level, which in turn provides for improvement of the ADS.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 illustrates two vehicles provided with sensor(s) in accordance with some embodiments .
Fig. 2A illustrates a scene formed by a number of LiDAR scans in accordance with some embodiments.
Fig. 2B illustrates the scene of fig. 2A with different forms of RROs marked in accordance with some embodiments.
Fig. 3 is a flowchart illustrating a method for generating an annotated training data set for training a perception algorithm of an ADS of a vehicle in accordance with some embodiments.
Fig. 4 is another flowchart illustrating a specific example of the method illustrated by the flowchart in fig. 3 in accordance with some embodiments.
Fig. 5 is a schematic view of a vehicle equipped with an ADS in accordance with some embodiments.
Fig. 6 is a schematic view of an apparatus forming part of the vehicle of fig. 5, wherein the apparatus is arranged for generating the annotated training data set, in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

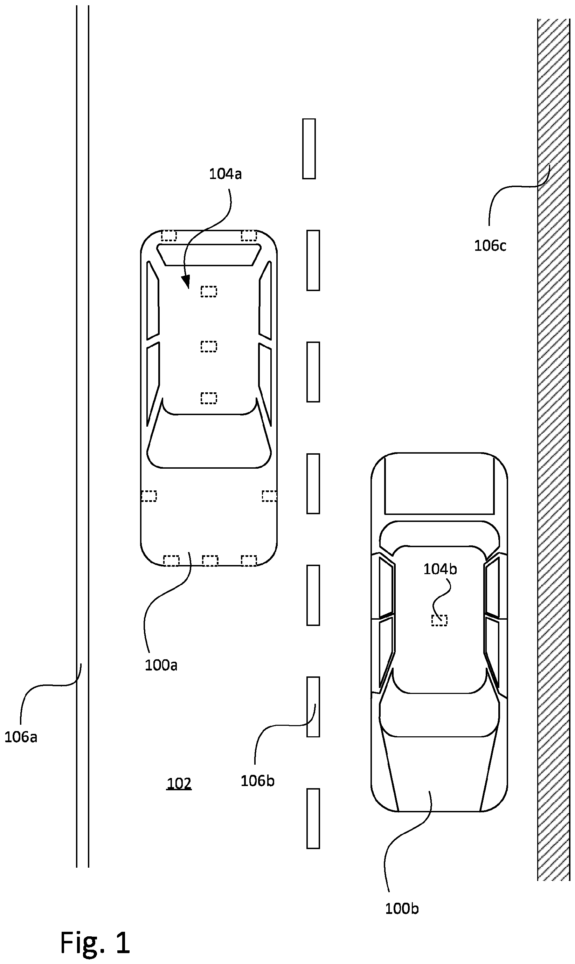

Fig. 1 generally illustrates a first and a second vehicle 100a, 100b on a road 102 from above. By way of example, the first vehicle 100a, herein exemplified as a car, is provided with a plurality of sensors 104a. Using the plurality of sensors may be a preferred option if using image-based sensors or other sensors with a limited field of view, by way of example less than 180 degrees. As illustrated, the second vehicle 100b is by way of example provided with a single sensor 104b. Using such single sensor 104b may be a preferred option in case the sensor is a LiDAR (Light Detection and Ranging) sensor, or other sensor that can scan 360 degrees, or at least more than 180 degrees. In addition, it also possible to use several LiDAR sensors or a single image-based sensor. By way of example, it is possible to use several LiDAR sensors, each LiDAR sensor provided with a 120 degree field of view.

The plurality of sensors 104 of the first vehicle 100a as well as the sensor 104b of the second vehicle 100b can be configured to identify road reference objects (RROs) 106a-c during operation and based on detections of these RROs, control steering, acceleration, braking and any other action forming part of automated driving. The RROs may come in different forms. By way of example, as illustrated, the RROs may encompass lane markers in the form of solid lines 106a and lane markers in the form of non-solid lines (dashed lines) 106b, but also RROs in the form of median barriers 106c or other objects defining the roads without being markings made on the road 102.

In addition to the sensors 104a, 104b illustrated in fig 1, there may be other sensors comprised in the vehicles 100a, 100b that are not specifically arranged for detecting, or identifying, the RROs 106a-c. For instance, in addition to the sensors 104a-b, there may be sensors in the form of image sensors provided in rear ends of the vehicles for assisting a driver when reversing the car, or for autonomously reversing the car without the driver being involved. In addition, there may be different kinds of distance sensors, sometimes referred to as proximity sensors, e.g. radar, provided on the vehicles that can be used in e.g. situations with pedestrians close to the vehicles.

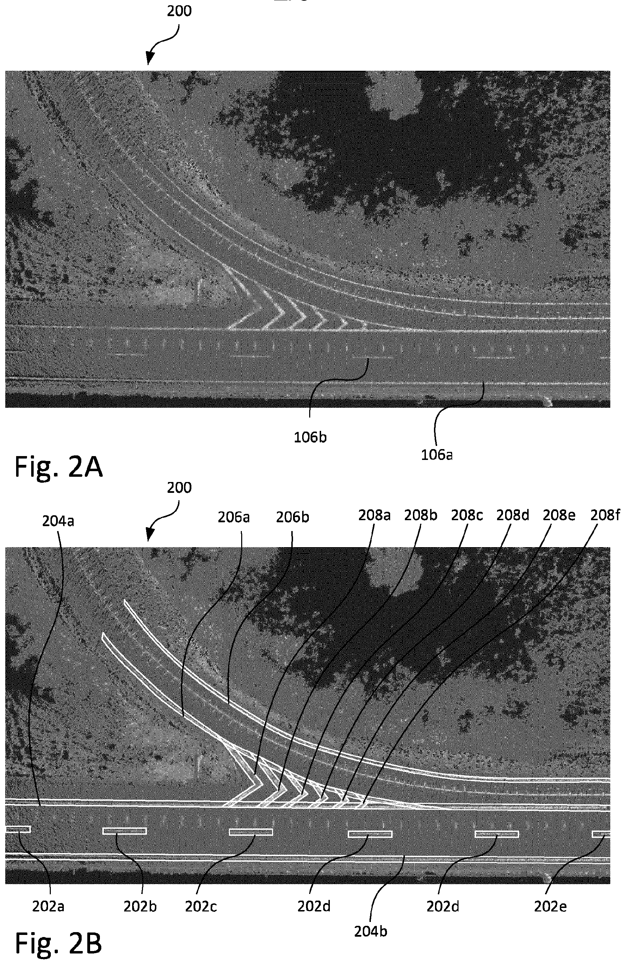

If using the LiDAR sensor, scans may be made and thereafter these can be aggregated into a single scene 200, as illustrated in fig. 2A. In this single scene 200, different RROs can be identified. By way of example, the RROs in the form of lane markers (dashed lines) 106b as well as RROs in the form of solid lines 106a can be identified, as illustrated.

When producing training data for a deep neural network (DNN), or other model that can be trained for automatically detecting RROs, a human operator may be provided with the single scene, as illustrated by way of example in fig. 2A, for creating e.g. polylines that represents the RROs in the scene 200. In addition, it also often requested that detections made by the LiDAR sensors that do not represent RROs are identified by the operator. Put differently, the operator is often requested to not only identify positives, that is, RROs present, but also to identify negatives, that is, point clouds that do not represent RROs.

To improve efficiency for producing the training data, also herein referred to as an annotated training data set, a so-called RRO prediction neural network can be used. In short, this neural network can be trained for predicting, sometimes referred to as detecting, the dashed line lane markers 106a, the solid line lane markers 106b, the median barriers 106c and other RROs that may be useful for the purpose of automated driving.

Once having the predictions done, these may be matched. The matching may comprise determining a distance between a point cloud, that is, detections made related to one of the RROs, in the first frame with the same point cloud in the second frame, and in case the distance is below a threshold, this point cloud may be considered to be related to an actual RRO depicted in the sensor data. On the other hand, in case the distance is above the threshold, the point cloud may be ruled out as a point cloud related to an actual RRO depicted in the sensor data, also referred to as frames or scans. Put differently, in case the point cloud cannot be found in both the first and second frame, the point cloud is considered to be not related to any actual RRO depicted, i.e. a negative. Another example of matching is to determine the distance by using nodes of a polygon representing one of the RROs. For instance, in case the RRO is a lane marker, this may be represented by the polygon and the nodes of this polygon may be used for determining a point, e.g. a mid-point of the polygon. This point may be compared with a corresponding point in another frame for determining the distance.

By making use of that the frames, sometimes referred to as scans, are interrelated, incorrect predictions made by the RRO prediction neural network can be identified. The two frames can be interrelated in that they are temporally interrelated, that is, they are captured close in time such that one or more RROs are depicted in both frames, and/or that the two frames are spatially interrelated, that is, the two frames are captured by two different sensors having at least partly overlapping field of view such that the one or more RROs are depicted in both frames.

To keep track of the point clouds found to match, a global RRO position data set may be used. If matching point clouds are found in the first and second frame, this point cloud may be added to the global RRO position data set. As an alternative, instead of adding the point cloud, the RROS, e.g. lane markers, extracted from the point clouds may be added. Since there may be several RROs depicted in each frame, the RRO position data set for each frame may comprise one or more RRO position data sub-sets, each being related to one RRO found in the frame. In the same way, the global RRO position data set may comprise one or more global RRO position data sub-sets. Since the global RRO position data set is only populated in case there is a point cloud, representing a RRO, in at least two frames, each global RRO position data sub-set has corresponding RRO position data sub-sets in at least two frames.

Once the RRO position data sets have been predicted by using the RRO prediction neural network, and the one or more RRO position data sets have been matched such that the global RRO position data set is formed, the annotated training data set can be formed for a sequence of frames, comprising at least the first and second frame, and the global RRO position data set. Thus, instead of manually identifying and marking different point clouds in different frames for forming the annotated training data set, it is made possible with the approach suggested herein to predict positions for the RROs in the different frames automatically by using the RRO prediction neural network. Since the RRO position data sub-sets, each related to one RRO in one frame, may include false positives, this can be overcome by matching the different RRO position data sub-sets in different frames such that non-matched RROs can be removed. By having a large number of frames and having most RROs depicted in multiple frames, a risk of removing true positives can be held at a low level. In the same way, in case there are false negatives in a frame, that is, no RROs present but still (incorrectly) reflected by the RRO position data sub-sets associated with the frame, these have to be present in at least two frames to be reflected in the global RRO position data set. As an effect, an incorrect detection made in a single frame can be corrected during the matching.

Tolerances used for predicting may be adjusted in line with matching criteria such that an adequate overall performance is achieved. A frame frequency, that is, a time between two subsequent frames, may be taken into account when setting prediction tolerances and the matching criteria. For example, in case the frames are captured at a high frequency, the likelihood of having the RROs depicted in multiple frames is high. This in turn may provide for that the matching criteria can be such that the RROs should be present in at least three consecutive frames and fulfilling the distance threshold condition. As an effect of this, the prediction tolerances can be set such that there are deliberately false positives created, i.e. a significant number of false positives created, thereby reducing a risk of missing out true positives. On the contrary, in case the frames are captured at low frequency, the likelihood of having the RROs depicted in several frames are lower compared to the case with high frequency frame capturing. As an effect, false positives may be more difficult to identify and remove during the matching step. For this reason, the prediction tolerances may be set more strict in this case compared to the high frequency frame capturing.

By way of example, in fig. 2B, the scene 200 with identified RROs is illustrated. As illustrated, the RROs may come in different forms. For instance, the RROs may be the lane markers 202a-e dividing two lanes of the road in a right lane and a left lane. A further example is that the RROs may be solid line markers 204a-b defining side borders of the road. Still an example is that the RROs may be hatched area markers 208a-f. The identified RROs may be indicated by polylines as readily understood by the skilled person in the art.

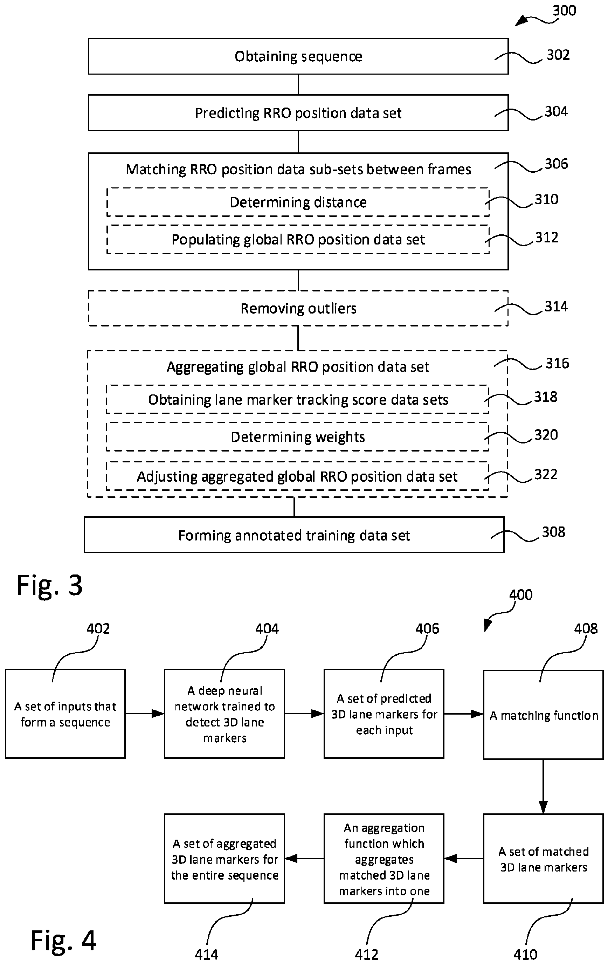

Fig. 3 is a flowchart illustrating a method 300 for generating the annotated training data set that can be used for training the perception algorithm, sometimes referred to as perception module, of the ADS. The method comprises obtaining 302 a sequence of frames captured by one or more LiDAR sensors. Thereafter, predicting 304, by using the RRO prediction neural network, the RRO position data set for each of at least a sub-set of the frames. Each RRO position data set may comprise one or more RRO position data sub-sets for one or more RROs, respectively. Once having made the prediction, the method may further comprise matching 306 the one or more RRO position data sub-sets of one frame with the one or more RRO position data sub-sets of at least one other frame to populate the global RRO position data set. The global RRO position data set may comprise one or more global RRO position data sub-sets. Each of the global RRO position data sub-sets may have corresponding RRO position data sub-sets in at least two of the frames. Finally, the method may comprise forming 308 the annotated training data set based on the sequence and the global RRO position data set.

As described above, each frame may comprise the RRO position data set, which in turn may comprise one or more RRO position data sub-sets. Each of the RRO position data sub-set(s) is related to one RRO found in the frame. The global RRO position data set may comprise one or more global RRO position data sub-sets. As the name suggest, the global RRO position data set is overarching several frames. As described above, in order to form a global RRO position data sub-set for one RRO, this RRO should be predicted by the RRO prediction neural network in at least two of the frames.

The method 300 may be used for fully automatic annotation, i.e. annotation made without human intervention, or it can be done as a pre-annotation for a human operator. For instance, in the latter case, the step of forming may involve that the human operator confirms or rejects machine-suggested annotations.

The matching 306 may in turn comprise for each of the one or more RRO position data sub-sets of the one frame, for each of the one or more RRO position data sub-sets of the at least one other frame, determining 310 a distance between the RRO position data sub-set of the one frame and the RRO position data sub-set of the at least one other frame, in case the distance is below the minimum distance threshold, populating 312 the RRO position data sub-set of the one frame to the global RRO position data set. Even though using the distance, e.g. a minimum distance, has proven a viable alternative, it is equally possible to use other measures for determining that that the RRO position data sub-sets of different frames are likely to relate to the same RRO.

Optionally, to further reduce the risk of having false positives in the annotated training data set, subsequent to matching 306, the method may further comprise removing 314 outliers from the global RRO position data set. The outliers may be global RRO position data sub-sets of the global RRO position data set that significantly differ from a rest of the global RRO position data sub-sets of the global RRO position data set.

The method may comprise aggregating 316 the global RRO position data set by adjusting the global RRO position data sub-sets placed inside a defined window. By way of example, the global RRO position data set may be adjusted to be aligned along a polyline formed by a number of lane markers. The polyline can be formed by averaging the positions of the lane marker detections within a window. The step of aggregating 316 may in turn comprise obtaining 318 lane marker tracking score data sets from a lane marker tracking device, determining 320 weights based on the lane marker tracking score data sets, and adjusting 322 the aggregated global RRO position data sets by using the weights. By also taking into account the weights from the lane marker tracking device, the aggregating may be further improved.

The method 300 is preferably a computer-implemented method, performed by a processing system of the ADS-equipped vehicle. The processing system may for example comprise one or more processors and one or more memories coupled to the one or more processors, wherein the one or more memories store one or more programs that perform the steps, services and functions of the method 300 disclosed herein when executed by the one or more processors.

Executable instructions for performing these functions are, optionally, included in a non-transitory computer-readable storage medium or other computer program product configured for execution by one or more processors.

Fig. 4 is a flowchart illustrating a more detailed method 400 provided by way of example. In line with the method 300 illustrated in fig. 3, a set of inputs that form a sequence 402 may be provided. The inputs may be scans from the LiDAR sensor as discussed above, but it may be inputs from other types of sensors as well. The RRO prediction neural network, herein exemplified as a deep neural network trained to detect 3D lane markers 404, may be used for generating a set of predicted 3D lane markers for each input 406. This set 406 may be fed to a matching function 408 in which the predicted 3D lane markers from different inputs are compared. After having performed the matching, a set of matched 3D lane markers 410 can be provided. Each match may be a set of detections, one from each input. The set of matched 3D lane markers 410 may thereafter be fed to an aggregation function 412 that aggregates matched 3D lane markers into one. By way of example, if having global RRO position data sub-sets placed spatially close to one another these may be aggregated into one and the same global RRO position data sub-set. As input to the aggregation function, lane marker tracking score data sets may be provided. By making use of this data provided by a lane marker tracking device, historic data may be taken into account, resulting in that position data for the aggregated 3D lane markers can be determined more precisely.

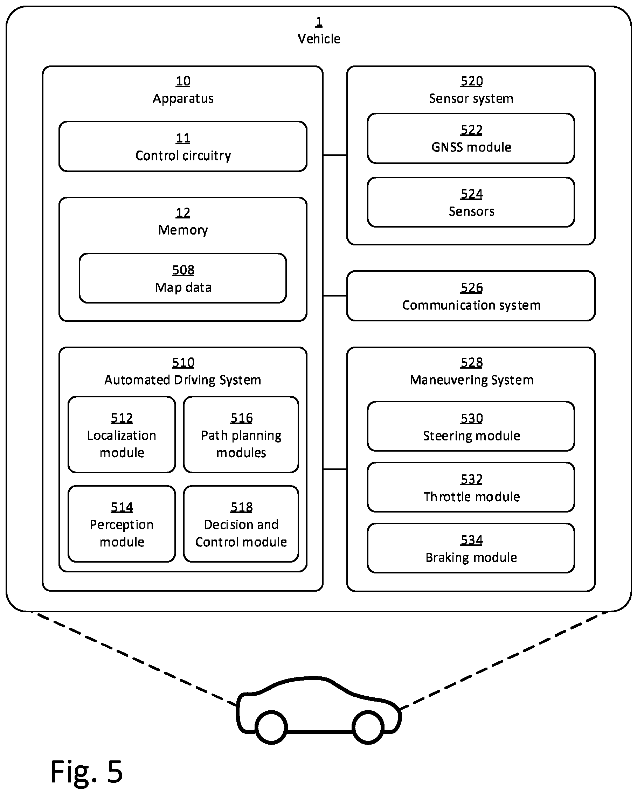

Fig. 5 is a schematic illustration of an ADS-equipped vehicle 1 comprising an apparatus 10. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 510). Moreover, the apparatus 10 may form a part of the ADS 510, i.e. the apparatus 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 508. The map data 508 may for instance be used by the ADS 510 of the vehicle 1 in order to perform autonomous functions of the vehicle 1. The map data 508 may comprise high-definition (HD) map data. It is contemplated that the memory 12, even though illustrated as a separate element from the ADS 510, may be provided as an integral element of the ADS 510. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 510 or any other system of the vehicle 1. In other words, according to an exemplary embodiment, any distributed or local control circuitry device may be utilized in the realization of the present inventive concept. The ADS 510 is configured carry out the functions and operations of the autonomous or semi-autonomous functions of the vehicle 1. The ADS 510 can comprise a number of modules, where each module is tasked with different functions of the ADS 510.

The vehicle 1 comprises a number of elements which can be commonly found in autonomous or semi-autonomous vehicles. It will be understood that the vehicle 1 can have any combination of the various elements shown in Fig. 5. Moreover, the vehicle 1 may comprise further elements than those shown in Fig. 5. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 5 should be seen merely as an illustrative example, as the elements of the vehicle 1 can be realized in several different ways.

The vehicle 1 further comprises a sensor system 520. The sensor system 520 is configured to acquire sensory data about the vehicle itself, or of its surroundings. The sensor system 520 may for example comprise a Global Navigation Satellite System (GNSS) module 522 (such as a GPS) configured to collect geographical position data of the vehicle 1. The sensor system 520 may further comprise one or more sensors 524. The sensor(s) 524 may be any type of on-board sensors, such as cameras, LIDARs and RADARs, ultrasonic sensors, gyroscopes, accelerometers, odometers etc. It should be appreciated that the sensor system 520 may also provide the possibility to acquire sensory data directly or via dedicated sensor control circuitry in the vehicle 1.

The vehicle 1 further comprises a communication system 526. The communication system 526 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 526 may communicate using one or more communication technologies. The communication system 526 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 526 may accordingly provide the possibility to send output to a remote location (e.g. remote operator or control center) and/or to receive input from a remote location by means of the one or more antennas. Moreover, the communication system 526 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 528. The maneuvering system 528 is configured to control the maneuvering of the vehicle 1. The maneuvering system 528 comprises a steering module 530 configured to control the heading of the vehicle 1. The maneuvering system 528 further comprises a throttle module 532 configured to control actuation of the throttle of the vehicle 1. The maneuvering system 528 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 528 may be communicatively connected to the ADS 510 of the vehicle, to receive instructions on how the various modules of the maneuvering system 528 should act. Thus, the ADS 510 can control the maneuvering of the vehicle 1, for example via the decision and control module 518.

The ADS 510 may comprise a localization module 512 or localization block/system. The localization module 512 is configured to determine and/or monitor a geographical position and heading of the vehicle 1, and may utilize data from the sensor system 520, such as data from the GNSS module 522. Alternatively, or in combination, the localization module 512 may utilize data from the one or more sensors 524. The localization system may alternatively be realized as a Real Time Kinematics (RTK) GPS in order to improve accuracy.

The ADS 510 may further comprise a perception module 514 or perception block/system 514. The perception module 514 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 514 may thus be adapted to rely on and obtain inputs from multiple data sources, such as automotive imaging, image processing, computer vision, and/or in-car networking, etc., in combination with sensory data e.g. from the sensor system 520.

The localization module 512 and/or the perception module 514 may be communicatively connected to the sensor system 520 in order to receive sensory data from the sensor system 520. The localization module 512 and/or the perception module 514 may further transmit control instructions to the sensor system 520.

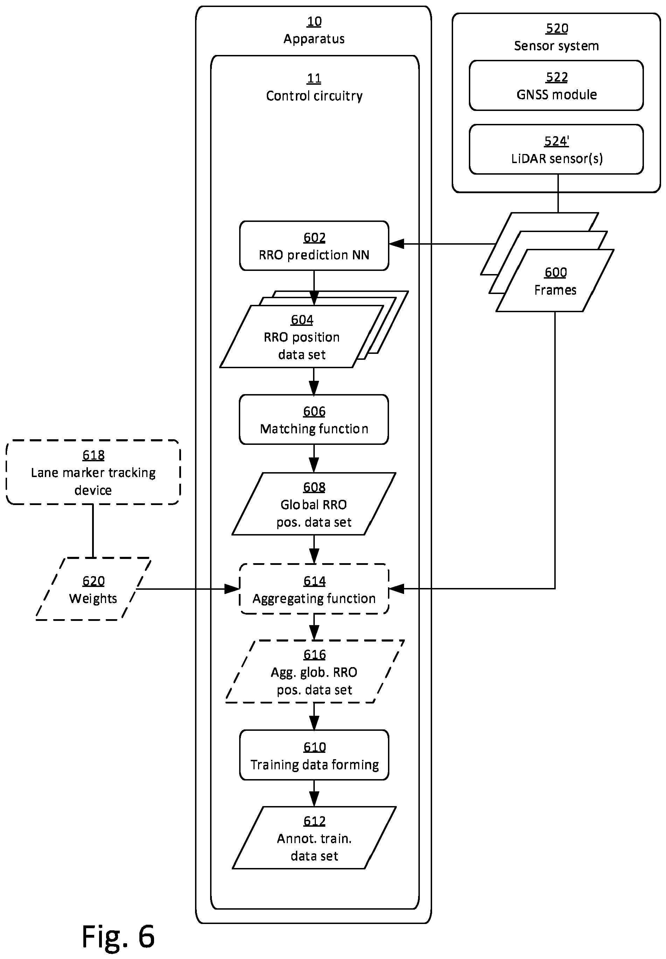

Fig. 6 is a schematic block diagram representation of the apparatus 10 for generating the annotated training data set 612 for training the perception algorithm 514, also referred to as perception module 514, of the ADS 510 of the vehicle 1. The apparatus 10 can comprise the control circuitry 11 (e.g. one or more processors) configured to perform the functions of the method 300 disclosed herein, where the functions may be included in a non-transitory computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method 300 according to any one of the embodiments disclosed herein. However, in order to better elucidate the herein disclosed embodiments, the control circuitry is represented as various "modules", "functions" or "blocks" in Fig. 6, each of them linked to one or more specific functions of the control circuitry.

As illustrated, by way of example, a sequence 600 of frames may be obtained from a LiDAR sensor 524', or any other sensor 524 used for generating the sequence. An RRO prediction neural network 602 can be used for predicting the RRO position data set 604. By using a matching function 606, the global RRO position data set 608 may be populated. Thereafter, by using a training data forming function 610, the global position data set 608 and the sequence 600 may be formed into the annotated training data set 612.

Optionally, an aggregating function 614 may be used for transforming the global RRO position data set 608 into the aggregated global RRO position data set 616. In line with the description related to fig. 3, the aggregating function may comprise adjusting the global RRO position data set such that this, by way of example, is aligned with the polyline. To further improve the aggregating function 614, weights 620 generated by a lane marker tracking device 618, or lane marker tracking module 618, may be provided to the aggregating function. The lane marker tracking device 618 may form part of the ADS 510 and/or may be external to the vehicle 1.

As described above, the annotated training data set 612 may be generated by the vehicle 1. After being generated, this may be transferred to a central server or a cloud environment such that this data set can be combined with other data sets from other vehicles into a combined annotated training data set that can be used for training the perception algorithm, also referred to as perception module. A benefit with having the vehicle 1 generating the annotated training data set 612 is that this can be made during times when spare processing power is available. In addition, by having several vehicles, i.e. a fleet, generating the training data, a large variety of traffic situations, weather conditions, etc can be achieved.

Instead of having the annotated training data set 612 generated by the vehicle 1, the apparatus 10 illustrated in fig. 6 may be external to the vehicle 1, while the sensor system 520 is forming part of the vehicle 1. As an effect, the sequence of frames 600 can be transmitted to a server or cloud environment configured for generating the annotated training data set 612. Having such set-up may be relevant in situations when there is data transfer capacity available, but limited processing power in the vehicle 1.

The two approaches may be used in parallel and whether to process the sequence of frames 600 in the vehicle 1 or the server or cloud environment may depend on, as explained above, available processing power in the vehicle as well as available data transfer capacity. Another option is to have the generation of the annotated training data set 612 solely made in the vehicle 1 or solely made in the server or the cloud environment. In other words, the server may comprise the apparatus 10. Further, the cloud environment may comprise one or more of the servers.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a computing device, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the apparatus 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor (e.g., via a circuit or any other wired, wireless, or network connection) and includes computer code for executing one or more processes described herein.

Accordingly, it should be understood that parts of the described solution may be implemented either in the vehicle 1, in a system located external the vehicle 1, or in a combination of internal and external the vehicle; for instance in a server in communication with the vehicle, a so called cloud solution. For instance, sensor data may be sent to an external system and that system performs the steps of the method 300, 400 according to any one of the embodiments disclosed herein. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving signals comprising information about a movement and information about a current road scenario may be interchanged based on a specific realization. Such variation will depend on the software and hardware systems chosen and on designer choice. All such variations are within the scope of the invention. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (300) for generating an annotated training data set (612) for training a perception algorithm (514) of an automated driving system (ADS) (510) of a vehicle (1), said method (300) comprising:
obtaining (302) a sequence of frames (600) captured by one or more Light Detection and Ranging (LiDAR) sensors (524'),
predicting (304), by using a road reference object (RRO) prediction neural network (602), an RRO position data set (604) for each of at least a sub-set of the frames (600), wherein each RRO position data set (604) comprises one or more RRO position data sub-sets for one or more RRO:s, respectively, wherein each RRO position data sub-set is related to spatial information of one RRO found in the frames,
matching (306) the one or more RRO position data sub-sets of one frame with the one or more RRO position data sub-sets of at least one other frame to populate a global RRO position data set (608), wherein the global RRO position data set (608) comprises one or more global RRO position data sub-sets, wherein each of the global RRO position data sub-sets has corresponding RRO position data sub-sets in at least two of the frames (600), and
forming (308) the annotated training data set (612) based on the sequence and the global RRO position data set (608).

2. The method according to claim 1, wherein a matching criteria is that the one or more RRO position data sub-sets of one frame and the one or more RRO position data sub-sets of at least one other frame is placed within a minimum distance threshold.

3. The method according to claim 2, wherein the step of matching (306) further comprises for each of the one or more RRO position data sub-sets of the one frame,
for each of the one or more RRO position data sub-sets of the at least one other frame,
determining (310) a distance between the RRO position data sub-set of the one frame and the RRO position data sub-set of the at least one other frame,
in case the distance is below the minimum distance threshold,
populating (312) the RRO position data sub-set of the one frame to the global RRO position data set.

4. The method (300) according to any one of the preceding claims, further comprising
removing (314) outliers from the global RRO position data set, wherein the outliers are global RRO position data sub-sets of the global RRO position data set that significantly differ from a rest of the global RRO position data sub-sets of the global RRO position data set.

5. The method (300) according to any one of the preceding claims, further comprising
aggregating (316) the global RRO position data set by adjusting the global RRO position data sub-sets placed inside a defined window.

6. The method (300) according to claim 5, wherein the RRO position data sub-sets pertains to lane marker positions, and wherein the step of aggregating (316) the global RRO position data set into an aggregated global RRO position data set further comprises:
obtaining (318) lane marker tracking score data sets from a lane marker tracking device,
determining (320) weights based on the lane marker tracking score data sets, and
adjusting (322) the aggregated global RRO position data sets by using the weights.

7. The method according to any one of the preceding claims, wherein each of the frames (600) is a 100 to 360 degree scan.

8. The method according to any one of the preceding claims, wherein the sequence of frames (600) comprise detections made over a period of time.

9. The method according to any one of the preceding claims, wherein the sequence of frames (600) comprise detections made by more than one LiDAR sensor (524') over a range of positions in a three-dimensional space.

10. The method according to any one of the preceding claims, wherein the RRO position data sub-sets (604) comprises lane marker positions.

11. The method according to any one of the preceding claims, wherein the RRO position data set (604) comprises position data sets of median barriers.

12. A computer program product comprising instructions which, when the program is executed by a computing device, causes the computer to carry out the method (300) according to any one of the claims 1 - 11.

13. An apparatus (10) for generating an annotated training data set (612) for training a perception algorithm (514) of an automated driving system (ADS) (510) of a vehicle (1), the apparatus comprising a control circuitry (11) configured to:
obtain a sequence of frames (600) captured by at least one LiDAR sensor (524'),
predict, by using a road reference object (RRO) prediction neural network (602), an RRO position data set (604) for each of at least a sub-set of the frames, wherein each RRO position data set comprises one or more RRO position data sub-sets for one or more RROs, respectively, wherein each RRO position data sub-set is related to spatial information of one RRO found in the frames,
match the one or more RRO position data sub-sets of one frame with one or more RRO position data sub-sets of at least one other frame to populate a global RRO position data set, wherein the global RRO position data set comprises one or more global RRO position data sub-sets, wherein each of the global RRO position data sub-sets has corresponding RRO position data sub-sets in at least two of the frames, and
form the annotated training data set (612) based on the sequence and the global RRO position data set (608).

14. The apparatus (10) according to claim 13, wherein the RRO position data sub-sets pertains to lane marker positions, wherein the control circuitry (11) is further configured to:
obtain lane marker tracking score data sets from a lane marker tracking device (618),
determine weights (620) based on the lane marker tracking score data sets, and
adjust the aggregated global RRO position data sets (616) by using the weights (620).

15. A vehicle (1) comprising:
an ADS (510) comprising a perception algorithm (514),
at least one LiDAR sensor (524'), and
an apparatus (10) for generating an annotated training data set (616) for training the perception algorithm (514) of the ADS (510) according to claim 13 or 14.
